## Europäisches Patentamt
## European Patent Office
## Office européen des brevets

(19)

(11) Veröffentlichungsnummer: **0 065 293**
**B1**

(12) **EUROPÄISCHE PATENTSCHRIFT**

(45) Veröffentlichungstag der Patentschrift:
**14.08.85**

(51) Int. Cl.⁴: **B 23 Q 11/00**

(21) Anmeldenummer: **82104242.1**

(22) Anmeldetag: **14.05.82**

(54) Reinigungsvorrichtung für Maschinenspindeln.

(30) Priorität: **16.05.81 DE 3119597**

(43) Veröffentlichungstag der Anmeldung:
**24.11.82 Patentblatt 82/47**

(45) Bekanntmachung des Hinweises auf die Patenterteilung:
**14.08.85 Patentblatt 85/33**

(84) Benannte Vertragsstaaten:
**AT CH DE FR GB IT LI SE**

(56) Entgegenhaltungen:
**CH - A - 615 105**
**DD - A - 86 549**
**DE - C - 383 631**
**GB - A - 2 070 493**
**US - A - 1 706 302**

(73) Patentinhaber: **David, Klaus,**
**Heinrich-Lersch-Strasse 17, D-4000 Düsseldorf (DE)**

(72) Erfinder: **David, Klaus, Heinrich-Lersch-Strasse 17,**
**D-4000 Düsseldorf (DE)**

(74) Vertreter: **Koscholke, Gotthold, Dr.-Ing., Rheinallee 147,**
**D-4000 Düsseldorf 11 (DE)**

ACTORUM AG

## Beschreibung

Die Erfindung bezieht sich auf eine Vorrichtung zum Reinigen des Innenkegels einer Maschinenspindel, insbesondere der Arbeitsspindel einer Werkzeugmaschine, mit einem Tragkörper und einem den letzteren auf einem Teil seiner Länge umgebenden, in den Innenkegel der Spindel einführbaren kegelförmigen Reinigungskörper.

Der Innenkegel einer Maschinenspindel dient zur Aufnahme eines entsprechend konischen Teiles, das sich mit der Spindel drehen soll, um eine bestimmte Aufgabe zu erfüllen. Es kann sich dabei insbesondere um ein Werkzeug, z.B. ein Ausbohrwerkzeug oder ein Fräswerkzeug, handeln oder aber auch um ein anderes Objet, beispielsweise ein Tastinstrument, Messgerät oder dgl. Der Zustand des Innenkegels der Spindel ist dabei ausschlaggebend für die richtige Aufnahme des einzusetzenden Kegels und somit für die Genauigkeit einer durchzuführenden Bearbeitungsoperation, eines Messvorganges oder dgl. Schon kleine Verunreinigungen können sich dabei sehr ungünstig auswirken.

Zur Säuberung des Innenkegels bediente sich der Bedienungsmann der Maschine bisher einfach eines Tuches oder bisweilen auch eines mit einem Lederbezug versehenen Holzkegels, der von Hand in den Innenkegel der Spindel eingeführt und darin gedreht werden muss. Dies erfordert nicht nur Zeit, sondern verlangt auch eine gewisse Umsicht und Geschicklichkeit des die Arbeit Ausführenden.

Weiterhin ist auch eine Vorrichtung zum Reinigen eines Innenkegels bekannt (CH-A-615 105), die einen mit besonderem Kragen und einer Umfangsnut darin versehenen Kopf aufweist, der vom Greifer eines Werkzeugwechselsystems erfasst und gehalten werden kann. Ein sich von diesem Kopf nach hinten erstreckender, von drei sternförmig angeordneten Flügeln und einem muffenförmigen Abschlussteil gebildeter Innenteil ist von einem kegelförmigen Aussenteil umgeben, der relativ zum Innenteil undrehbar, aber um einen begrenzten Weg axial verschiebbar ist. In dem Aussenteil befinden sich drei in Richtung der Mantellinien verlaufende Fenster. Jeweils ein Rand jedes Fensters ist mit einer schräg nach aussen vorstehenden Klinge versehen, die einen Schaber für den Innenkegel der zu reinigenden Spindel bildet. Im Bereich jedes Fensters ist eine walzenförmige Bürste so angeordnet, dass sie bei einer Axialverschiebung des Innenteiles relativ zum Aussenteil aus einer radial inneren Position in eine radial äussere Position und umgekehrt bewegt wird. Ausserdem kann den Bürsten eine Drehung um ihre Achse erteilt werden. Dazu ist ein im Kopf gelagerter Ringteil vorgesehen, der Ausnehmungen zum Eintritt von an der Spindel vorhandenen Mitnehmersteinen sowie eine Innenverzahnung aufweist, in die Antriebsritzel für die Bürsten eingreifen.

Beim Einführen dieser Vorrichtung in den zu reinigenden Innenkegel einer Spindel kommen die als Schaber wirkenden Klingen in Kontakt mit der Wandung des Innenkegels. Die Spindel wird in Drehung versetzt, während die Vorrichtung selbst in Ruhe verbleibt, weil sie von dem ihren Kopf erfassenden Greifer ständig undrehbar gehalten ist. Durch die Spindeldrehung erhalten dann auch die Bürsten eine Drehbewegung. Ausserdem werden sie mittels einer Axialverschiebung des Innenteiles relativ zum Aussenteil radial nach aussen bewegt. Sie haben die Aufgabe, den von den Schabeklingen aufgenommenen Schmutz von denselben abzustreifen und in das Innere der Vorrichtung auf die sternförmigen Flügel zu schleudern. Bei der Beendigung des Reinigungsvorganges verlaufen die Vorgänge entsprechend umgekehrt, d.h. zuerst kehren die Bürsten wieder in ihre radial innere Ruhelage zurück, während die Schabeklingen noch im Kontakt mit dem Innenkegel der Spindel verbleiben, bis die Vorrichtung mittels des Greifers aus der Spindel herausgezogen wird.

Diese bekannte Vorrichtung kann nicht wie ein Werkzeug automatisch in einer Spindel gespannt werden, sondern benötigt zusätzlich zu den mit der Spindelnase in Eingriff zu bringenden Teilen einen besonderen Kragen mit Nut und einen daran angepassten speziellen Greifer. Dies bedingt einen zusätzlichen Aufwand. Während des Arbeitens der Vorrichtung muss der Sondergreifer an seiner Stelle verbleiben und die Vorrichtung ständig festhalten und sogar noch besondere Axialbewegungen während des Arbeitsablaufes ausführen. Er steht während dieser Zeit für andere Vorgänge nicht zur Verfügung.

Aufgabe der Erfindung ist es, eine Vorrichtung zum Reinigen eines Innenkegels zu schaffen, die den praktischen Erfordernissen' in besonderem Masse gerecht wird. Insbesondere strebt die Erfindung eine solche Ausbildung der Vorrichtung an, dass mit ihr der Reinigungsvorgang vollständig in einem automatischen Ablauf vonstatten gehen kann, ohne dass aufwendige Sondermassnahmen notwendig sind. Mit alledem zusammenhängende weitere Probleme, mit denen sich die Erfindung befasst, ergeben sich aus der jeweiligen Erläuterung der aufgezeigten Lösung.

Gemäss der Erfindung ist ein mit einem Belag, Besatz oder dgl. versehener hülsenförmiger Reinigungskegel auf einem Dorn oder dgl. eines Tragkörpers drehbar gelagert, wobei Mittel zum Bewirken einer Relativdrehung zwischen dem Reinigungskegel und dem Dorn vorhanden sind und wobei die Vorrichtung zur Durchführung des Reinigungsvorganges mittels wenigstens eines Fixierelements oder dgl. in der Arbeitsposition an der Spindel lösbar festlegbar ist. Insbesondere sieht die Erfindung vor, die Vorrichtung so auszubilden, dass sie anstelle eines Werkzeuges in einem automatischen Werkzeugwechselsystem einsetzbar ist.

Hinsichtlich der Mittel zum Bewirken einer Relativdrehung zwischen dem Reinigungskegel und dem Dorn bestehen mehrere Möglichkeiten. Insbesondere lässt sich ein Antriebsmotor vorsehen oder es kann eine Schwungmasse vorhanden sein und/oder ein nach aussen vorstehendes Element, mittels dessen der Reinigungskegel unter Belassung der Drehbarkeit des Dornes gegen Drehung gehalten werden kann.

Mit der Erfindung ist eine Vorrichtung geschaffen, mit welcher der Reinigungsvorgang bei einem Innenkegel in besonders günstiger Weise durchgeführt werden kann. Es ist dabei keine Abhängigkeit von der Geschicklichkeit eines Bedienungsmannes mehr gegeben. Obgleich das Einsetzen der Vorrichtung in die Spindel und das Verbinden mit der letzteren sowie das Herausnehmen nach dem Reinigungsvorgang von Hand geschehen kann, bietet die Erfindung darüber hinaus die vorteilhafte Möglichkeit, den gesamten Vorgang einschliesslich des Anbringens und Abnehmens der Vorrichtung automatisch ablaufen zu lassen.

Das Verbinden der Vorrichtung mit der Spindel kann je nach den Gegebenheiten auf verschiedene Weise geschehen, sei es mittels einer Schnellkupplung von an sich bekanntem Prinzip, sei es mittels eines Überwurfs, mittels hinter Vorsprünge an der Spindel greifender Teile oder auf ähnliche Weise. Soll die Vorrichtung bei einer Spindel verwendet werden, in der eine Spanneinrichtung zum lösbaren Festziehen eines Werkzeuges oder dgl. vorhanden ist, so weist die Vorrichtung vorteilhaft einen mit einer solchen Spanneinrichtung zusammenwirkenden Teil auf, beispielsweise einen Spannpilz am Ende, ebenso wie dies bei den in die Spindel einsetzbaren Werkzeugen oder anderen Objekten der Fall ist.

Der aussenseitige Belag oder Besatz des Reinigungskegels besteht aus einem Material, das vorhandene Verunreinigungen vom Innenkegel entfernen kann, ohne dessen Oberfläche zu beschädigen. Es gibt verschiedene Werkstoffe, die dieser Forderng genügen, u.a. auch geeignete Kunststoffe. Insbesondere kommt ein ganz oder teilweise bürstenartig ausgebildeter bzw. an der Oberseite mit Borsten oder ähnlichen Elementen versehener Besatz in Betracht. Dieser Belag kann auch ganz oder teilweise aus Leder bestehen. Ungeachtet der Art oder Ausbildung im einzelnen kann der Besatz die ganze Aussenseite des Reinigungskegels bedecken oder auch nur einen Teil derselben. Bei einer sehr vorteilhaften Ausführung ist der Besatz band- oder streifenförmig. Er kann dabei namentlich schraubenlinienartig verlaufen. Auch kann der Besatz sich in Richtung der Kegelmantellinien erstreckende Partien aufweisen oder durch solche gebildet sein.

Vorteilhaft sind im Bereich des Belages oder Besatzes des Reinigungskegels Durchtrittswege für ein Spülmedium vorgesehen. Diese können insbesondere durch Zwischenräume zwischen band- oder streifenförmigen Partien des Belages oder Besatzes gebildet sein. Als Spülmedium kommt vornehmlich ein gasförmiges Medium, namentlich Luft, in Betracht. Das Spülmedium wird vorteilhaft am vorderen Ende der Vorrichtung zugeführt, wozu eine Einlassstelle in diesem Bereich vorgesehen ist. Besonders günstig ist dies, wenn die Möglichkeit besteht, durch das Innere der Spindel Druckluft zuzuführen, wie es bei zahlreichen Maschinen auch zu anderen Zwecken der Fall ist.

Am Tragkörper lässt sich eine zur Anlage am Vorderende der den zu reinigenden Innenkegel aufweisenden Maschinenspindel geeignete Dichtung vorsehen. Es ist dann sichergestellt, dass an dieser Stelle kein Spülmedium in unerwünschter Weise entweichen kann.

Bei einer sehr zweckmässigen Ausführung der Vorrichtung ist der Reinigungskegel auf dem Dorn oder dgl. des Tragkörpers axial verschiebbar gelagert. Dies ermöglicht auch bei vorhandenen Toleranzen ein sicheres Anliegen des vom Reinigungskegel getragenen Belages oder Besatzes an dem Innenkegel. Dabei kann es in weiterer Ausgestaltung günstig sein, dass der Reinigungskegel unter der Wirkung wenigstens einer ihn auswärts in Spindelrichtung zu verschieben suchenden Feder steht und am Innenkegel zur Anlage kommt und ein beim Herausnehmen der Vorrichtung verschiebewegbegrenzender Anschlag vorhanden ist.

Der Reinigungskegel-Antriebsmotor ist bei einer sehr vorteilhaften Ausführung ein Druckluftmotor. Die Zuführung der Druckluft kann dabei von aussen vorgesehen werden. Besonders günstig ist es, als Betriebsmedium für den Antriebsmotor Spülluft für den Reinigungskegel zu verwenden.

Es ist weiterhin auch möglich, einen Elektromotor für den Antrieb des Reinigungskegels vorzusehen. Er kann seine Energie über eine von aussen kommende Zuleitung erhalten. Mit besonderem Vorteil weist jedoch der Tragkörper eine Stromquelle für den Antriebsmotor auf, etwa eine Batterie oder einen Akkumulator, so dass auch in diesem Fall die Vorrichtung eine unabhängige Einheit bildet. Zum Ein- und Ausschalten des Antriebs wird vorteilhaft ein Tastschalter vorgesehen.

Weitere Einzelheiten, Merkmale und Vorteile der Erfindung ergeben sich aus der nachfolgenden Erläuterung von Ausführungsbeispielen, aus der zugehörigen Zeichnung und aus den Ansprüchen. Es zeigen:

Fig. 1 eine Ausführung der erfindungsgemässen Vorrichtung in Ansicht,

Fig. 2 einen Längsschnitt durch die Vorrichtung nach Fig. 1, wobei der Schnitt im oberen Teil gegenüber dem unteren Teil um 90° versetzt geführt ist, und

Fig. 3 eine andere Ausführung der erfindungsgemässen Vorrichtung im Längsschnitt.

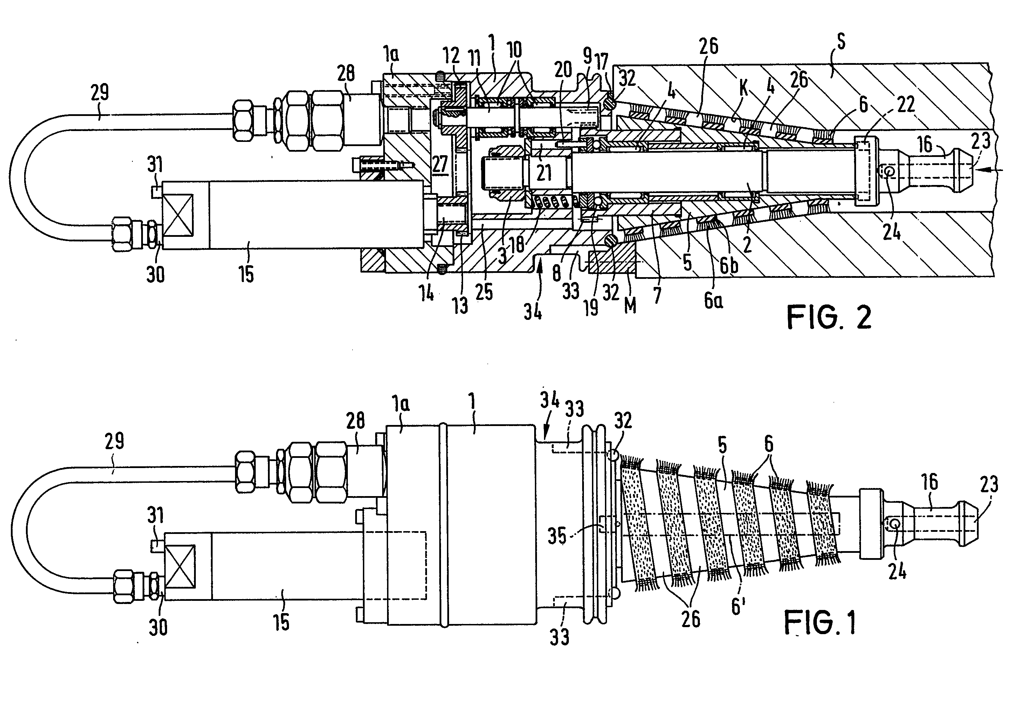

Zur Veranschaulichung des Einsatzes der erfindungsgemässen Vorrichtung ist in Fig. 2 eine Arbeitsspindel S (z.B. die Spindel eines Bohr- und Fräswerkes) mit einem Innenkegel K zur Aufnahme von Werkzeugen mit entsprechendem Kegel eingezeichnet, jedoch ohne Wiedergabe einer Spanneinrichtung. Die dargestellte Vorrichtung enthält einen aus mehreren Teilen zusammengesetzten, insgesamt mit der Ziffer 1 bezeichneten Tragkörper. Von diesem geht ein Dorn 2 aus, der mit dem Tragkörper 1 durch eine selbstsichernde Mutter 3 starr verbunden ist, so dass der Tragkörper mit dem Dorn eine Einheit bildet. Auf dem Dorn 2 ist über Wälzlager 4, eine Gleitlagerung wäre auch möglich, ein hülsenförmiger Kegel 5 drehbar gelagert, der auf seiner Mantelfläche mit einem Besatz in Form eines schraubenförmig verlaufenden Bandes 6 versehen ist. Dieses besteht bei dem gezeigten Ausführungsbeispiel aus einem bürstenartigen Element in Form eines mit Borsten 6a versehenen Trägers 6b. Der Besatz kann auch durch in Richtung der Kegelmantellinien verlaufende Bänder oder anders geformte Partien gebildet sein, wie in Fig. 1 bei der Ziffer 6' angedeutet ist.

Der Kegel 5 ist fest mit einer Buchse 7 verbunden, die in ihrem hinteren Teil als Zahnrad 8 ausgebildet ist. Darin greift das als Ritzel 9 ausgebildete Ende einer im Tragkörper 1 in Wälzlagern 10 gelagerten Welle 11 ein, die an ihrem anderen Ende ein Zahnrad 12 trägt. In dieses greift ein auf der Ausgangswelle 14 eines Motors 15 sitzendes Antriebsritzel 13 ein. Der in einem Deckelteil 1a des Tragkörpers 1 gehaltene Motor ist in Fig. 2 ebenso wie andere Teile der Deutlichkeit halber um 90° versetzt gezeichnet. Deshalb ist der Eingriff des Ritzels 13 in das Zahnrad 12 mit strichpunktierten Linien angedeutet. Somit ist es möglich, durch den Motor 15 über die beiden Getriebestufen den Reinigungskegel 5 drehend anzutreiben.

Bei dem dargestellten Ausführungsbeispiel ist der Dorn 2 an seinem vorderen Ende als Spannpilz 16 ausgebildet, derart, dass er mit einer der Spindel S zugeordneten Spanneinrichtung zusammenwirken kann. Derartige Spanneinrichtungen sind in zahlreichen Ausführungen bekannt, z.B. bei Horizontal-Bohr- und Fräswerken. Beim Spannen mittels einer solchen Einrichtung kommt ein Bereich an der Stirnseite des Tragkörpers 1 bzw. ein dort angebrachter Ring 17 zur Anlage an der Stirnfläche der Arbeitsspindel S.

Der Besatz 6 des Reinigungskegels 5 liegt in dieser Arbeitsposition der Vorrichtung am Innenkegel K an, so dass er bei einer Drehung des Kegels durch den Motor 15 die gesamte Kegelfläche überstreicht und dabei von Verunreinigungen säubert.

Bei dem dargestellten Ausführungsbeispiel ist in zusätzlicher Ausgestaltung der Vorrichtung der Reinigungskegel 5 ausser seiner drehbaren Anordnung auf dem Dorn 2 auch noch auf diesem in begrenztem Masse axial verschiebbar. Er steht dabei gemäss einem vorteilhaften Merkmal unter der Wirkung von mehreren über den Umfang verteilt angeordneten Druckfedern 18, die im Tragkörper 1 untergebracht sind und von denen nur eine in Fig. 2 erkennbar ist. Die Druckfedern wirken dabei über ein Axiallager 19 auf die Hülse 7 bzw. einen an dieser anliegenden Lagerring. Durch einen oder mehrere Stifte 20, die in Bohrungen 21 des Tragkörpers eingreifen, ist eine Verdrehsicherung gegeben. Der axiale Verschiebeweg des Reinigungskegels 5 auf dem Dorn 2 ist nach vorne durch einen Anschlag 22 begrenzt.

Die Reinigungswirkung wird bei der wiedergegebenen Ausführung der Vorrichtung noch dadurch unterstützt, dass Luft als Spülmedium verwendet wird. Es ist dabei vorgesehen, dass Druckluft, die bei zahlreichen Maschinen an einer Stelle innerhalb der Arbeitsspindel zur Verfügung steht, bei eingespannter Vorrichtung in Richtung des in Fig. 2 eingezeichneten Pfeiles in eine stirnseitige Öffnung 23 im Spannpilz 16 eintritt und durch eine oder mehrere Bohrungen 24 in den Raum zwischen dem Innenkegel K der Spindel S und dem Reinigungskegel 5 gelangt. Sie kann dann ihren Weg durch die zwischen dem schraubenförmig angebrachten Besatz 6 verbliebenen, ebenfalls schraubenförmig verlaufenden Durchtrittswege 26 nehmen und gelangt anschliessend durch Bohrungen 25 im Tragkörper 1 in einen Innenraum 27 desselben. Wenn der Motor 15 als Luftmotor ausgebildet ist, wie es bei diesem Ausführungsbeispiel der Fall ist, kann er unmittelbar durch die Spülluft versorgt werden, so dass keine besondere Luftzuleitung zum Motor von aussen her erforderlich ist. Die Luft gelangt dabei aus dem Innenraum 27 über einen Filter 28 und eine Rohrleitung 29 zum Einlassstutzen 30 des Motors 15. Die Abluft desselben kann aus einem Auslassstutzen 31 ausströmen. Um zu gewährleisten, dass die gesamte Menge der Spülluft zum Motor 15 gelangt, ist zweckmässig an der Stirnseite des Tragkörpers 1 ein Dichtungsring 32 vorgesehen, der am Vorderende der Arbeitsspindel S zur Anlage kommt, wie es aus Fig. 2 ersichtlich ist. Dabei ist auch die Anlage des Dichtungsringes 32 an einem der üblicherweise an einer Arbeitsspindel vorhandenen, in Nuten eines Werkzeugkörpers eingreifenden Mitnehmersteine M erkennbar. Der Mitnehmerstein M ist innenseitig zweckmässig der Kontur des Innenkegels K angepasst. Der Tragkörper 1 ist ebenso wie entsprechende Werkzeuge mit Ausnehmungen 33 versehen, in welche die Mitnehmersteine eingreifen können.

Statt eines Luftmotors kann auch ein anderer Antrieb für den Reinigungskegel vorhanden sein, insbesondere ein kleiner Elektromotor, der dann in entsprechender Weise am Tragkörper 1 befestigt ist. Zu dessen Stromversorgung ist dann zweckmässig eine an oder im Tragkörper angeordnete Batterie oder dgl. vorgesehen. Wenn dabei auch eine Spülung mit Luft oder einem anderen Medium vorgesehen ist, kann gegebenenfalls die Dichtung 32 entfallen, so dass die Luft sogleich am Stirnende der Spindel austreten kann.

Die Vorrichtung weist vorteilhaft einen Schalter auf, insbesondere einen Tastschalter, der so angeordnet ist, dass ein Elektromotor als Antrieb für den Reinigungskegel beim Einsetzen der Vorrichtung in die Spindel eingeschaltet und beim Herausnehmen aus der Spindel ausgeschaltet wird. In Fig. 1 ist strichpunktiert ein solcher Schalter 35 eingezeichnet, der mit der Stirnfläche der betreffenden Spindel zusammenwirken kann.

Die gesamte Vorrichtung ist so ausgebildet, dass sie anstelle eines Werkzeuges einen Platz in einem Magazin einer automatischen Werkzeugwechselvorrichtung einnehmen und statt eines Werkzeuges in die Spindel der zugehörigen Maschine eingesetzt und aus dieser wieder herausgenommen und in den Speicher zurückgeführt werden kann. So weist der Tragkörper 1 eine Ringnut 34 auf, an der die Zange oder der Greifer eines Übergabeorgans eines Werkzeugwechslers angreifen kann. Es können ausserdem Codierungen an sich bekannter Art vorhanden sein. In jedem Fall, auch bei Platzcodierung, ist es in vorteilhafter Weise möglich, zu einem gewünschten Zeitpunkt die Reinigungsvorrichtung automatisch in die Spindel einzuführen und deren Innenkegel zu säubern. Dies kann in einem Programmablauf an bestimmter Stelle vorgesehen sein und gegebenenfalls auch auf zusätzliches Kommando zu einem beliebigen Zeitpunkt durchführbar sein.

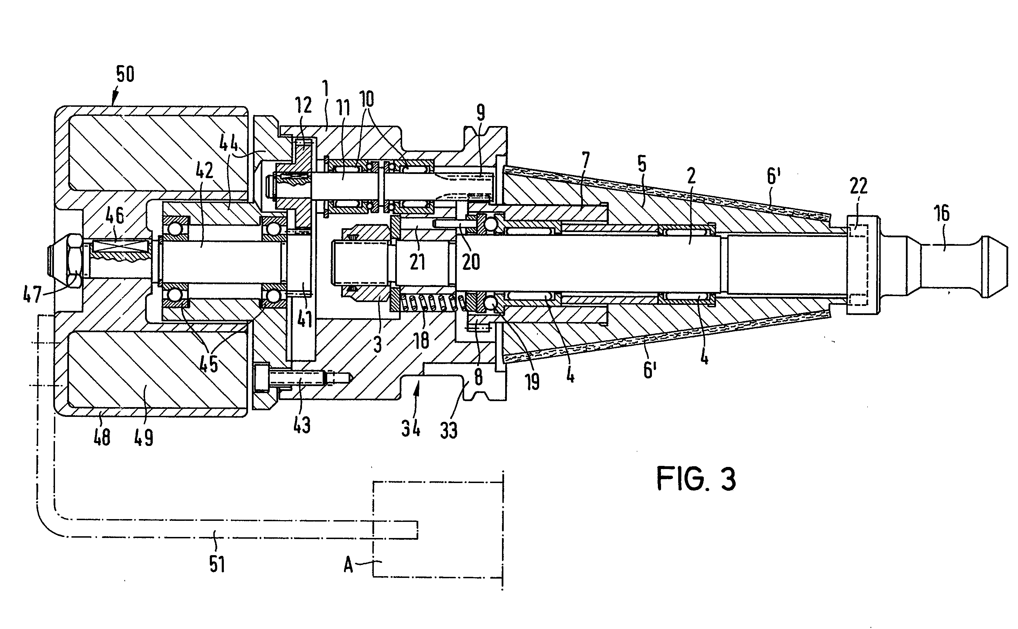

In Fig. 3 ist eine Ausführung der Vorrichtung dargestellt, die keinen Motor enthält, sondern auf andere Weise ein Drehen des Reinigungskegels 5 ermöglicht. Wie bei der Ausführung nach Fig. 2 ist der Reinigungskegel 5 auf dem Dorn 2 drehbar gelagert und auf diesem auch in begrenztem Masse axial verschiebbar. Mit der Ausführung nach Fig. 2 übereinstimmende oder dieser ähnliche Teile sind in Fig. 3 mit den gleichen Bezugsziffern wie dort bezeichnet.

Die entsprechenden Erläuterungen zu Fig. 2 gelten somit auch hier.

Der Besatz des Reinigungskegels 5 ist durch Streifen 6' aus geeignetem Material gebildet, die in Richtung der Mantellinien verlaufen (vgl. auch Fig. 1).

Mit dem Zahnrad 12 des Getriebes steht ein Zahnrad 41 im Eingriff, das fest am Ende einer Welle 42 sitzt. Diese ist zentrisch in einem mit dem Tragkörper 1 durch Schrauben 43 verbundenen Lagerflansch 44 in Kugerllagern 45 gelagert. Auf dem anderen Ende der Welle 42 ist mittels Passfeder 46 und selbstsichernder Mutter 47 eine Schwungmasse 50 undrehbar, aber lösbar befestigt. Die Schwungmasse 50 besteht aus einem Gehäuse 48 mit einer Füllung 49 aus einem schweren Material, z.B. Blei.

Bei dieser Ausführung ist ein Luftanschluss nicht erforderlich. Die gewünschte Relativbewegung zwischen dem Reinigungskegel 5 und der die Vorrichtung aufnehmenden Maschinenspindel wird hier durch Verzögerung bzw. Beschleunigung der Schwungmasse 50 mittels Drehung der Maschinenspindel bewirkt.

Die Vorrichtung wird z.B. mit Hilfe einer üblichen Werkzeugwechsel-Einrichtung aus einem Magazin entnommen und in den Innenkegel der Maschinenspindel eingesetzt (vgl. auch Fig. 2). Während die Werkzeugwechsel-Einrichtung das nächste Werkzeug für die Bearbeitung aus dem Magazin holt, wird die Arbeitsspindel kurz in Drehung versetzt und sogleich wieder abgebremst bzw. stillgesetzt, was automatisch im Rahmen des Werkzeugwechsel-Vorganges geschehen kann. Während die Maschinenspindel anläuft, bleibt die Schwungmasse 50 infolge ihrer Trägheit bei der Drehbewegung zunächst zurück und wird erst allmählich beschleunigt. Beim Stillsetzen der Arbeitsspindel läuft die Schwungmasse 50 dann aber noch weiter, ehe sie zur Ruhe kommt. Durch eine solche verzögerte und nachlaufende Drehung der Schwungmasse 50 kommt über das Getriebe 41, 12, 11, 9 und 8 eine Relativbewegung zwischen dem Reinigungskegel 5 und dem Innenkegel der Arbeitsspindel und somit der Reinigungsvorgang mittels des Besatzes 6' des Reinigungskegels 5 zustande. Bei der gezeigten vorteilhaften Ausführung ist das Getriebe 8, 9, 11, 12, 41 untersetzend. Es sind aber auch andere Ausbildungen möglich, etwa eine Übersetzung 1 : 1 oder grösser.

Abweichend von der Ausführung nach Fig. 3 kann gemäss der Erfindung die Schwungmasse auch unmittelbar mit einem Reinigungskegel 5 verbunden oder sogar durch diesen selbst gebildet sein. Im letztgenannten Fall erhält der Reinigungskegel eine entsprechend schwere Ausbildung.

Eine weitere Ausführung der Vorrichtung besteht darin, dass ein nach aussen vorstehender Hebel 51 vorhanden ist, der mit dem Reinigungskegel 5 unmittelbar oder über ein Getriebe oder sonstige Zwischenglieder so verbunden ist, dass beim Festhalten dieses Hebels 51 auch der Reinigungskegel 5 an einer Drehung gehindert ist. Das Festhalten des Hebels 51 geschieht zweckmässig so, dass dieser an einem feststehenden Anschlag A zur Anlage kommt, der sich z.B. an dem die Maschinenspindel enthaltenden Maschinenteil, etwa einem Spindelkasten oder dgl., oder an einer anderen geeigneten Stelle befindet. Der Hebel 51 lässt sich dabei auch so ausbilden und anbringen, dass er in einer anderen Richtung als der Anschlagrichtung ausweichen kann oder nachgiebig ist.

In Fig. 3 ist der Hebel 51 lediglich der Einfachheit der Darstellung halber als am Gehäuse 48 der Schwungmasse 50 befestigt gezeichnet. Es braucht jedoch keine Schwungmasse vorhanden zu sein, sondern der Hebel 51 kann an jedem geeigneten Teil der Vorrichtung angebracht sein, das mit dem Reinigungskegel 5 unmittelbar oder mittelbar in Verbindung steht, so z.B. an der Welle 42 oder auch an einem Getriebeglied, etwa einem Zahnrad, Zahnkreuz oder dgl.

Bei der Benutzung der Vorrichtung, wenn diese in eine Arbeitsspindel eingesetzt ist, genügt es, die Spindel kurz in Drehung zu versetzen. Weil dabei der Reinigungskegel 5 durch den Hebel 51 festgehalten ist und deshalb relativ zu dem sich mit der Spindel drehenden Dorn 2 stehen bleibt, findet eine Relativbewegung zwischen dem Reinigungskegel 5 und dem Innenkegel der Spindel statt, wodurch dieser Innenkegel gereinigt wird.

Unabhängig von der sonstigen Ausführung der Vorrichtung kann der Reinigungskegel 5 nach der Erfindung statt mit einem festen Besatz auch mit einem Besatz in Form einzelner beweglich gehaltener oder gelagerter Elemente versehen sein. So lassen sich z.B. am Umfang des Reinigungskegels kleine zylinderförmige, kegelförmige oder auch runde Reinigungselemente mit Borsten oder sonstiger zum Reinigen geeigneter Oberfläche vorsehen, die drehbar auf Achsen gelagert sind, welche im Reinigungskegel gehalten sind. Es ist dabei auch möglich, solchen Elementen eine Drehbewegung zu erteilen, z.B. nach dem Prinzip eines Planetengetriebes oder dgl.

## Patentansprüche

1. Vorrichtung zum Reinigen des Innenkegels (K) einer Maschinenspindel, insbesondere der Arbeitsspindel (S) einer Werkzeugmaschine, mit einem Tragkörper (1) und einem den letzteren auf einem Teil seiner Länge umgebenden, in den Innenkegel der Spindel einführbaren kegelförmigen Reinigungskörper (5), dadurch gekennzeichnet, dass der mit einem Belag, Besatz (6) oder dgl. versehene hülsenförmige Reinigungskegel (5) auf einem Dorn (2) oder dgl. des Tragkörpers (1) drehbar gelagert ist, dass Mittel (15, 50, 51) zum Bewirken einer Relativdrehung zwischen dem Reinigungskegel (5) und dem Dorn (2) vorhanden sind und dass die Vorrichtung mittels wenigstens eines Fixierelements (16) oder dgl. in der Arbeitsposition lösbar festlegbar ist.

2. Vorrichtung nach Anspruch 1, dadurch gekennzeichnet, dass sie einen Antriebsmotor (15) zum Drehen des Reinigungskegels (5) aufweist.

3. Vorrichtung nach Anspruch 2, dadurch gekennzeichnet, dass der Reinigungskegel-Antriebsmotor (15) ein Druckluftmotor ist.

4. Vorrichtung nach Anspruch 3, dadurch gekennzeichnet, dass als Betriebsmedium für den Antriebsmotor (15) Spülluft für den Reinigungskegel vorgesehen ist.

5. Vorrichtung nach Anspruch 2, dadurch gekennzeichnet, dass der Reinigungskegel-Antriebsmotor (15) ein Elektromotor ist.

6. Vorrichtung nach Anspruch 5, dadurch gekennzeichnet, dass der Tragkörper (1) eine Stromquelle für den Antriebsmotor (15) aufweist.

7. Vorrichtung nach einem der Ansprüche 2 bis 6, gekennzeichnet durch einen Schalter (35), mittels dessen der Antriebsmotor für den Reinigungskegel (5) beim Einsetzen der Vorrichtung in die Spindel (S) einschaltbar und beim Herausnehmen aus der Spindel (S) ausschaltbar ist.

8. Vorrichtung nach einem der Ansprüche 1 bis 7, gekennzeichnet durch eine drehbare Schwungmasse (50) zum Erzeugen einer Relativbewegung zwischen dem Reinigungskegel (5) und dem Dorn (2).

9. Vorrichtung nach einem der Ansprüche 1 bis 8, gekennzeichnet durch einen nach aussen vorstehenden Hebel (51) oder dgl., mittels dessen der Reinigungskegel (5) unter Belassung der Drehbarkeit des Dornes (2) gegen Drehung festhaltbar ist.

10. Vorrichtung nach einem der Ansprüche 1 bis 9, dadurch gekennzeichnet, dass sie als eine anstelle eines Werkzeuges in einem automatischen Werkzeugwechselsystem einsetzbare Einheit ausgebildet ist.

11. Vorrichtung nach einem der Ansprüche 1 bis 10, dadurch gekennzeichnet, dass der Reinigungskegel (5) auf dem Dorn (2) oder dgl. axial verschiebbar gelagert ist.

12. Vorrichtung nach Anspruch 11, dadurch gekennzeichnet, dass der Reinigungskegel (5) unter der Wirkung wenigstens einer ihn auswärts zu verschieben suchenden Feder (18) steht und ein den Verschiebeweg begrenzender Anschlag (22) vorgesehen ist.


**Claims**

1. Apparatus for cleaning the inner cone (K) of a machine spindle, in particular the main spindle (S) of a machine tool, with a supporting body (1) and a conical cleaning body (5) which surrounds the supporting body (1) on a portion of its length and which can be inserted into the inner cone of the spindle, characterised in that the cleaning cone (5) which is in the form of a casing and which is provided with a coating, lining or the like is mounted in a rotatable manner on a shaft (2), or the like, of the supporting body (1), that means (15, 50, 51) are provided for effecting relative rotation between the cleaning cone (5) and the shaft (2), and that the device can be secured in the operating position in a detachable manner by means of at least one securing element (16) or the like.

2. Apparatus according to claim 1, characterised in that it has a drive motor (15) for rotating the cleaning cone (5).

3. Apparatus according to claim 2, characterised in that the cleaning cone drive motor (15) is a compressed air motor.

4. Apparatus according to claim 3, characterised in that scavenging air for the cleaning cone is provided as an operating medium for the drive motor (15).

5. Apparatus according to claim 2, characterised in that the cleaning cone drive motor (15) is an electric motor.

6. Apparatus according to claim 5, characterised in that the supporting body (1) has a current supply for the drive motor (15).

7. Apparatus according to any one of claims 2 to 6, characterised by a switch (35) by means of which the drive motor for the cleaning cone (5) can be switched on by inserting the apparatus in the spindle (S) and switched off by withdrawing it from the spindle (S).

8. Apparatus according to any one of claims 1 to 7, characterised by a rotational inertial mass (50) for generating relative rotation between the cleaning cone (5) and the shaft (2).

9. Apparatus according to any one of claims 1 to 8, characterised by an outwardly projecting lever (51) or the like, by means of which the cleaning cone (5) can be secured against rotating whilst maintaining the rotatability of the shaft.

10. Apparatus according to any one of claims 1 to 9, characterised in that it is designed as a unit which can be inserted, instead of a tool, in an automatic tool exchange system.

11. Apparatus according to any one of claims 1 to 10, characterised in that the cleaning cone (5) is mounted axially displaceably on the shaft (2) or the like.

12. Apparatus according to claim 11, characterised in that the cleaning cone (5) is acted upon by at least one spring (18) which endeavours to displace it outwardly and a stop (22) is provided which restricts the displacement path.


**Revendications**

1. Dispositif pour le nettoyage du cône interne (K) d'une broche de machine, en particulier de la broche de travail (S) d'une machine-outil, comprenant un corps porteur (1) et un cône de nettoyage conique (5) entourant le corps porteur sur une partie de sa longueur et pouvant être introduit dans le cône interne de la broche, caractérisé par le fait que le cône de nettoyage (5) en forme de douille, muni d'un revêtement, d'une garniture (6) ou analogue, est monté de manière rotative sur un mandrin (2) ou élément similaire du corps porteur (1), par le fait que des moyens (15, 50, 51) sont prévus pour provoquer une rotation relative entre le cône de nettoyage (5) et le mandrin (2) et par le fait que le dispositif peut être fixé de manière amovible, en position de travail, au moyen d'au moins un élément de fixation (16) ou élément similaire.

2. Dispositif selon la revendication 1, caractérisé par le fait qu'il présente un moteur d'entraînement (15) pour faire tourner le cône de nettoyage (5).

3. Dispositif selon la revendication 2, caractérisé par le fait que le moteur d'entraînement (15) du cône de nettoyage est un moteur à air comprimé.

4. Dispositif selon la revendication 3, caractérisé par le fait que l'air de rinçage destiné au cône de nettoyage est utilisé comme fluide de travail pour le moteur d'entraînement (15).

5. Dispositif selon la revendication 2, caractérisé par le fait que le moteur d'entraînement (15) du cône de nettoyage est un moteur électrique.

6. Dispositif selon la revendication 5, caractérisé par le fait que le corps porteur (1) présente une source de courant pour le moteur d'entraînement (15).

7. Dispositif selon l'une des revendications 2 à 6, caractérisé par un interrupteur (35) au moyen duquel le moteur d'entraînement du cône de nettoyage (5) est enclenchable lors de l'introduction du dispositif dans la broche (S) et déclenchable lors de son extraction de la broche (S).

8. Dispositif selon l'une des revendications 1 à 7, caractérisé par une masse centrifuge rotative (50) pour provoquer une rotation relative entre le cône de nettoyage (5) et le mandrin (2).

9. Dispositif selon l'une des revendications 1 à 8, caractérisé par un levier (51) ou analogue disposé en saillie vers l'extérieur au moyen duquel le cône de nettoyage (5) peut être bloqué contre toute rotation, la rotativité du mandrin (2) étant conservée.

10. Dispositif selon l'une des revendications 1 à 9, caractérisé par le fait qu'il est constitué d'une unité susceptible d'être introduite dans un système d'échange d'outils automatique, à la place d'un outil.

11. Dispositif selon l'une des revendications 1 à 10, caractérisé par le fait que le cône de nettoyage (5) est monté de manière à pouvoir coulisser axialement sur le mandrin (2) ou élément similaire.

12. Dispositif selon la revendication 11, caractérisé par le fait que le cône de nettoyage (5) est soumis à l'action d'au moins un ressort (18) ayant tendance à le déplacer vers l'extérieur et par le fait qu'il est prévu une butée (22) limitant l'amplutide du déplacement.

FIG. 2

FIG. 1

FIG. 3

0 065 293